# EUROPEAN PATENT SPECIFICATION

(11) **EP 2 206 442 B1**
(45) Date of publication and mention of the grant of the patent: **16.10.2013**
(21) Application number: 09380001.9
(22) Date of filing: 08.01.2009
(51) Int. Cl.: A43B 13/12, B29D 35/00, B29D 35/14, B29D 35/10

(54) **Process for manufacturing a work shoe**
Verfahren zur Herstellung eines Arbeitsschuhes
Procédé pour la fabrication d'une chaussure de travail

(43) Date of publication of application: 14.07.2010
(73) Proprietor: Calzados Robusta, S.L., 26580 Arnedo (La Rioja) (ES)
(72) Inventor: Hernandez Martinez-Portillo, Luis Miguel, 26580 Arnedo (La Rioja) (ES); Arechavaleta Garcia, Abelardo, 26580 Arnedo (La Rioja) (ES)
(74) Representative: Carpintero Lopez, Francisco

(56) References cited:
- EP-A1- 1 356 919
- ES-A1- 2 265 713
- FR-A1- 2 633 810

## Description

### Object of the Invention

The present invention relates to a process for manufacturing a work shoe combining the use of different materials for adapting the outsole to different work environments, providing at the same time a shoe which is very comfortable for the user.

### Background of the Invention

Rigid soles based on vulcanizable nitrile rubber have been used in the manufacture of (industrial, forest, army, etc.) work shoes, as it is shown in FR 2633810. These soles offer unbeatable features of resistance to wear and to abrasive substances typical of certain industries. However, their drawback is that they are excessively rigid and at the same time heavy.

On the other hand, depending on the field of work in which the shoe is to be used, the outsole will be different since it must be adapted to the features required by the ground, to the products with which the sole will be in contact, etc. In other words, there are on the market suitable shoes for grounds requiring a high adherence, shoes configured for use in industrial environments with hydrocarbons, oils, fire-resistant shoes, etc. The outsole of this type of shoe is usually made in a single material, which is the material suitable for being adapted to the needs of each case and with a specific configuration or design depending on the ground.

On the other hand, the outsole is generally joined to the shoe upper by means of the sewing system referred to as Goodyear®, which requires considerable labor and a laborious manufacturing process.

A vulcanizable rubber outsole and a midsole made of another more flexible material, such as polyurethane, have occasionally been used. However, the polyurethane midsole is visible outside the shoe, such that it can be attacked by acids or other agents when there are splashes in the workplace, also being less resistant to heat, which is an added problem.

It must also be emphasized that the vulcanizable rubber sole has one color, generally black or dark gray, having the same color both on the outer and on the inner surface, as a result of the fact that the rubber sole is obtained in a single molding operation followed by vulcanization from a one-color mass.

The process object of the invention allows obtaining a work shoe in which the outsole is made in two phases, such that in a first operation areas of the outsole with a specific design and features are obtained and in a second phase the rest of the outsole with a configuration and features is obtained. Once the outsole has been obtained, the process also allows obtaining a shoe which is very flexible and comfortable for the user.

### Description of the Invention

The object of the invention is a process for manufacturing a work shoe comprising an outsole and a shoe upper, comprising the following phases:
- depositing a first amount of a first mixture of vulcanizable rubber in a mold having a bathtub shape and an inner surface corresponding with the final outer shape of the outsole to be obtained. This first mixture of rubber can be deposited on defined areas in the mold corresponding with the toe and the heel of the outsole. These areas can have a thickness and configuration different from the rest of the inner surface of the mold. The areas can be defined by a delimiting peripheral rib, made in the mold delimiting the periphery of such areas.
- pressing the mentioned first mixture of rubber by means of at least one first countermold and starting the process for vulcanizing the mentioned mixture inside the areas delimited by the delimiting peripheral rib. The countermold can be a simple hold-down plate pressing the mixture against the mentioned areas defined in the mold, two areas with a specific configuration for being adapted to the required needs (adherence, flame, resistance, sliding, design, etc.) thus being obtained. Upon pressing the mentioned first mixture, the rib created in the areas creates a recess separating these areas from the rest of the outsole.
- removing the first countermold and depositing a second amount of a second mixture of vulcanizable rubber inside the mentioned mold. This phase is carried out when the vulcanization of the first mixture has still not been completed, such that upon depositing the second mixture, the latter is joined with the first mixture. The first and the second amount of vulcanizable rubber can have the same composition or can be different, such that, for example, the first mixture of rubber can contain some type of pigment so that the color of the areas defined in the mold corresponding with the heel and toe is different from the rest of the outsole. The first amount of the first mixture can be smaller than the second amount of the second mixture, since this second amount has to be enough to make the outsole.
- pressing the second mixture of rubber by means of a second countermold having an outer surface corresponding with the final inner shape of the outsole. This second countermold has dimensions smaller than the dimensions of the mold, such that a space through which the second mixture of rubber flows is defined between the mentioned second countermold and mold. Upon closing the mold and countermold, the second mixture fills the space defined between both molds and an outsole with a considerable height is thus achieved.
- ending the process for vulcanizing the first mixture of rubber and the second mixture of rubber to obtain an outsole having a bathtub shape with the required height, defining a cavity.
- extracting the outsole vulcanized in the previous phase from the mold.
- placing the outsole obtained in the previous phase in an injection mold and pouring polyurethane into the cavity of the outsole. The inner surface of this injection mold can have a configuration similar to the outer surface of the outsole to facilitate the coupling and adaptation of the outsole to the injection mold.
- assembling the shoe upper in a metal last.
- applying and pressing the shoe upper against the polyurethane injected in the cavity of the outsole.
- curing the polyurethane, such that the mentioned shoe upper is fixed to the outsole. In this case, it is the actual polyurethane which allows fixing the pre-formed shoe upper to the outsole.
- ending the process for curing the polyurethane and extracting the outsole and the shoe upper from the injection mold to obtain the work shoe.

There may be intermediate phases before the phase of placing the outsole in the injection mold, in order to refine the outsole, as well as to clean or treat it.

### Description of the Drawings

To complete the description and with the aim of aiding to better understand the features of the invention according to a preferred embodiment thereof, a set of drawings is attached as an integral part of said description in which the following has been shown with an illustrative and non-limiting character:
- Figure 1 shows a schematic section view of the mold and of the first countermold in an open position.
- Figure 2 shows a view similar to the previous figure anterior but with the first mixture of rubber deposited in the mold on the areas corresponding to the toe and heel.
- Figure 3 shows a schematic section view of the mold and countermold closed, with the first mixture of rubber molded inside the areas defined by the peripheral rib outlining the toe and heel.
- Figure 4 shows a schematic section view of the mold and first countermold moving in a transverse direction.

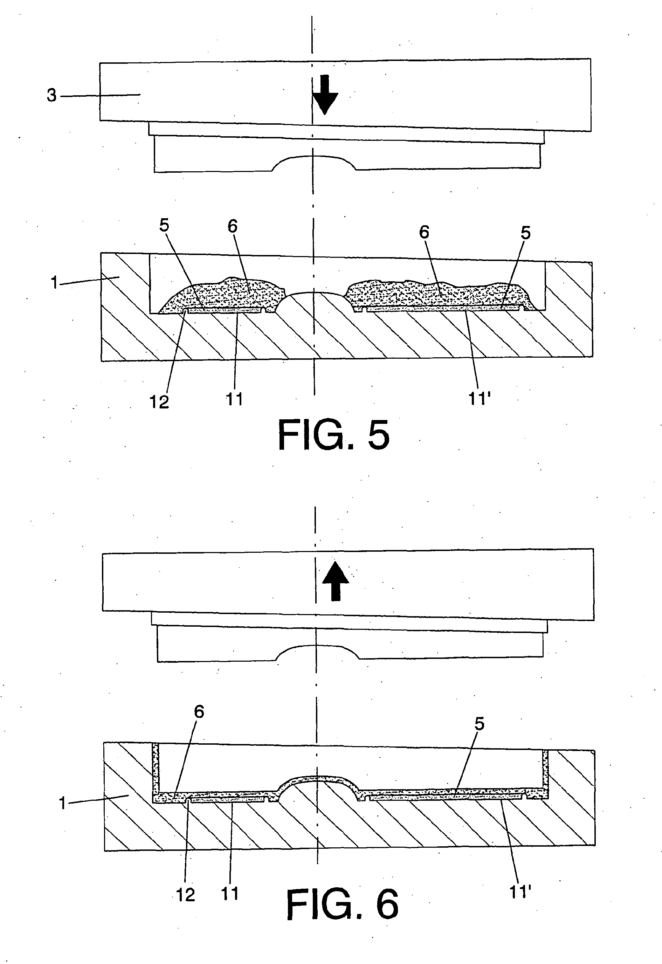

- Figure 5 shows a schematic section view of the second countermold and the mold in which the second mixture of rubber has been deposited.
- Figure 6 shows a schematic section view of the mold and second countermold open after molding the second mixture.
- Figure 7 shows a schematic view of the outsole extracted from the mold.
- Figure 8 shows a schematic section view of the injection mold and of the outsole to be placed in said injection mold.
- Figure 9 shows a schematic section view of the outsole coupled to the shoe upper with the interposition of the polyurethane injected in the injection mold.
- Figure 10 shows a schematic section view of the shoe obtained.

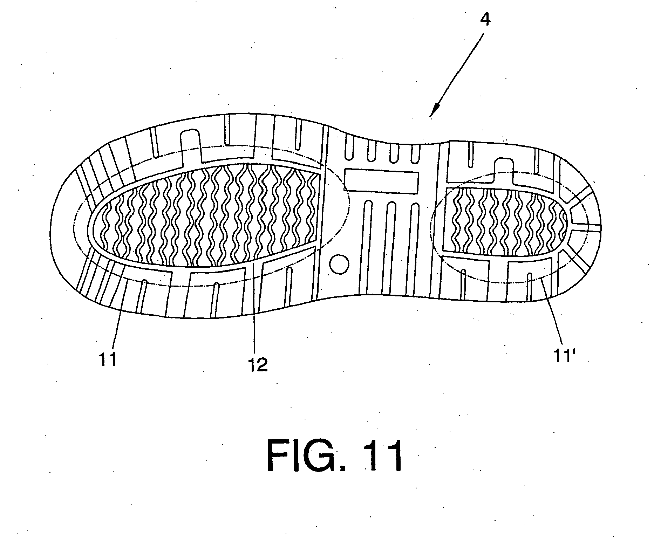

- Figure 11 shows a plan view of an example of outsole obtained.

### Preferred Embodiment of the Invention

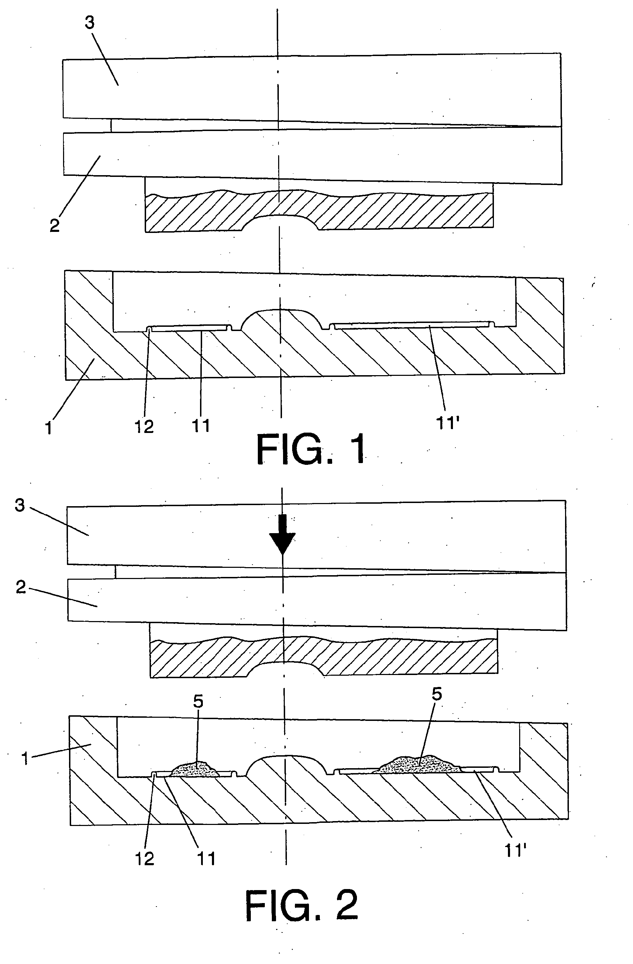

As observed in Figure 2, the first phase of the process object of the invention consists of depositing a first mixture (5) of vulcanizable rubber in the mold (1) The mold (1) has a bathtub shape and an inner surface corresponding with the final outer shape of the outsole (4) to be obtained. As seen in Figure 2, this first mixture (5) of rubber is deposited on areas (11,11') defined in the mold (1) corresponding with the toe and the heel of the outsole (4). These areas (11,11') can have an inner and outer drawing different from the rest of the outsole, while at the same time the mentioned mixture (5) must be the suitable one for being adapted to the features of resistance, adherence, hardness, etc. required in these areas. On the other hand, these heel and toe areas (11,11'), defined by means of a delimiting peripheral rib (12), have a design suitable for being adapted to the different conditions of the ground, such that, depending on the use for which the shoe is intended, the surface of these heel and toe areas will be different, the rest of the inner surface of the mold (1) being the same in all cases.

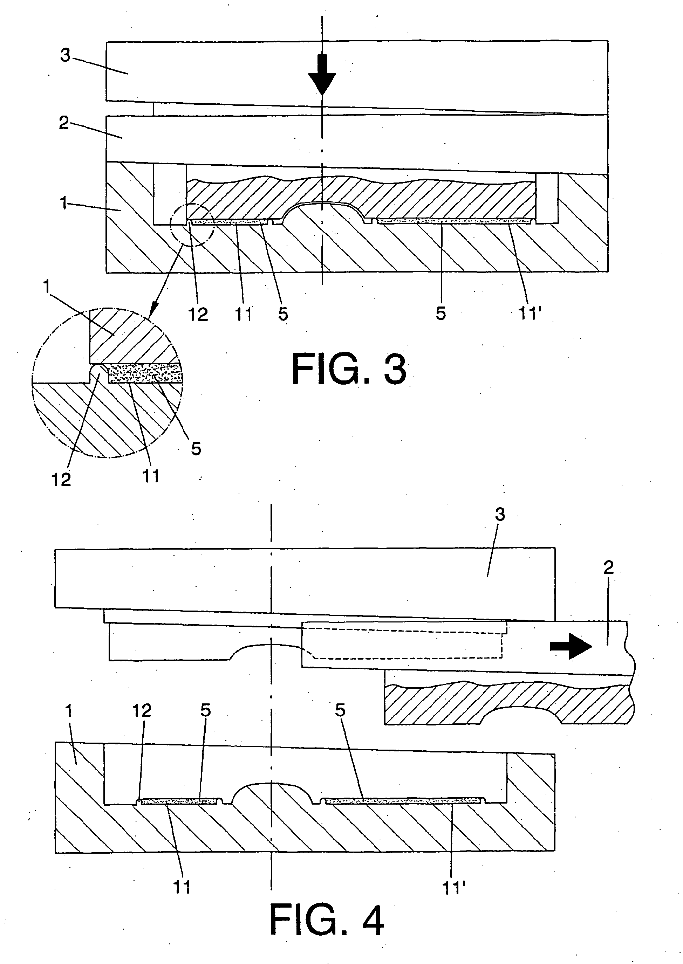

Once the first mixture (5) has been deposited in the mold (1), it is pressed by means of a first countermold (2), the process for vulcanizing the mentioned mixture (5) being started. The countermold (2) presses the mixture (5) against the mentioned areas (11,11') defined in the mold (1), two areas with a specific configuration for being adapted to the needs of the end user (adherence, resistance, etc.) thus being obtained. Figure 3 shows a detail of the rib (12) which, as observed, creates a recess separating the areas (11,11') from the rest of the outsole (4).

When the process for vulcanizing the first mixture (5) has still not ended, the first countermold (2) is raised and moved in a direction transverse to the raising movement, leaving the second countermold (3) visible.

A second amount of a second mixture (6) of vulcanizable rubber is then deposited inside the mentioned mold (1). As has already been indicated, this phase is carried out when the vulcanization of the first mixture (5) has still not been completed, such that upon depositing the second mixture (6), it superficially merges with the first mixture (5), both of them being joined together. The first mixture (5) of vulcanizable rubber can contain some type of pigment so that the color of this part of the outsole (4) is different from the rest.

Once the second mixture (6) has been deposited, it is pressed by means of the second countermold (3) having an outer surface corresponding with the final inner shape of the outsole (4). This second countermold (3) has dimensions smaller than the dimensions of the mold (1), such that a space through which the second mixture (6) of rubber flows is defined between the mentioned countermold (3) and mold (1). Upon closing the mold and countermold, the second mixture (6) fills the space defined between both molds and an outsole (4) with the required height is thus achieved.

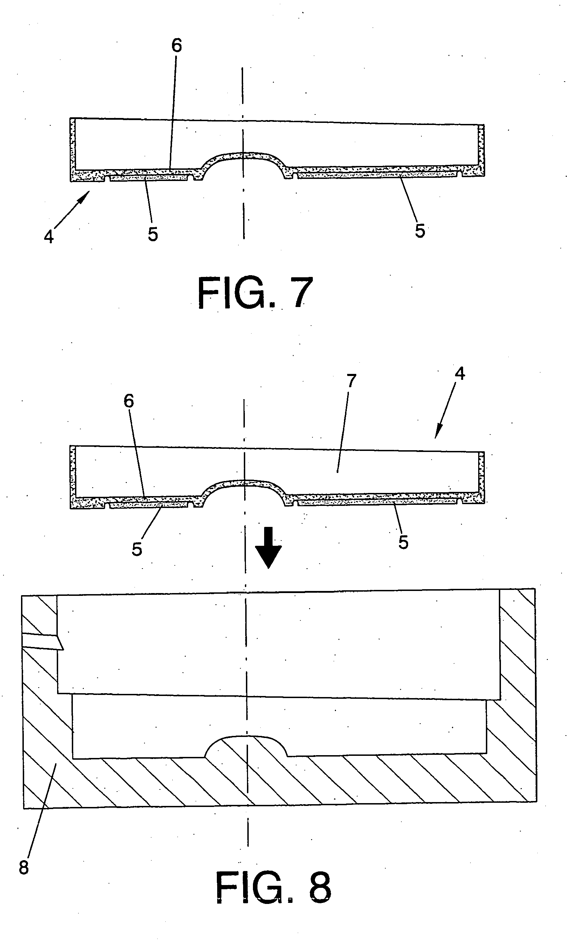

Figure 7 shows the outsole (4) which has already been extracted from the mold (1). As seen in this figure, the outsole (4) has a bathtub shape, defining a cavity (7).

Figure 8 shows how the outsole (4) is introduced in an injection mold (8), in which polyurethane (9) is poured into the mentioned cavity (7) of the outsole (4). The inner surface of this injection mold (8) can have a configuration similar to the outer surface of the outsole (4) so that the latter is more or less fitted in order to facilitate pouring the polyurethane (9) in the cavity (7) of the outsole (4).

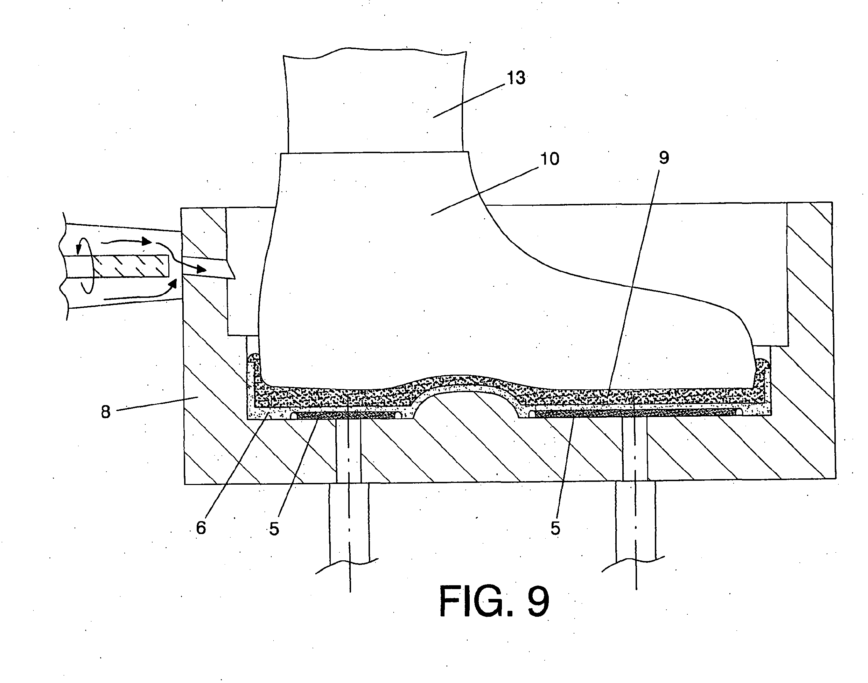

Once the polyurethane (9) has been poured into the cavity (7) of the outsole (4), the shoe upper (10) is assembled in a metal last (13), as can be seen in Figure 9. The shoe upper (10) is pressed against the polyurethane (9) until the mentioned upper (10) is fixed to the outsole (4). In this case, it is actual polyurethane (9) which allows fixing the shoe upper (10) to the outsole (4).

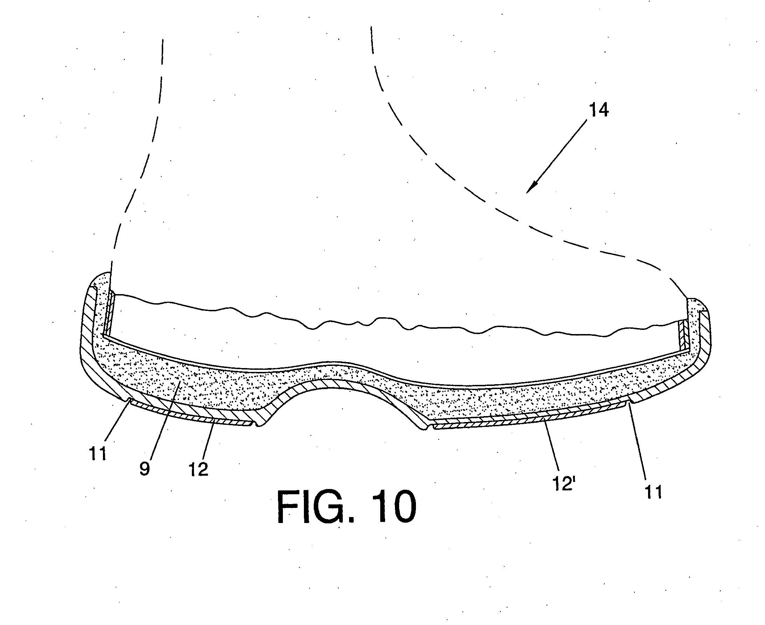

Figure 10 shows how, once the process for curing the polyurethane (9) has ended, the outsole (4) and the shoe upper (10) are extracted from the injection mold (8) to obtain the work shoe (14).

## Claims

1. Process for manufacturing a work shoe (14) comprising an outsole (4) and a shoe upper (10), comprising the following phases:
a) depositing a first amount of a first mixture (5) of vulcanizable rubber in a mold (1) having a bathtub shape and an inner surface corresponding with the final outer shape of the outsole (4) to be obtained;
b) pressing the mentioned first mixture (5) of rubber by means of at least one first countermold (2) and starting the process for vulcanizing the mentioned mixture (5)
c) removing the first countermold (2) and depositing a second amount of a second mixture (6) of vulcanizable rubber inside the mentioned mold (1);
d) pressing the second mixture (6) of rubber by means of a second countermold (3) having an outer surface corresponding with the final inner shape of the outsole (4), the dimensions of the second countermold (3) being smaller than the dimensions of the mold (1), such that a space through which the second mixture (6) of rubber flows is defined between the mentioned second countermold (3) and mold (1);
e) ending the process for vulcanizing the first mixture (5) of rubber and the second mixture (6) of rubber to obtain an outsole (4) having a bathtub shape, defining a cavity (7);
f) extracting the outsole (4) vulcanized in phase e);
g) placing the outsole (4) obtained in phase f) in an injection mold (8) and pouring polyurethane (9) into the cavity (7) of the outsole (4);
h) assembling the shoe upper (10) in a metal last (13);
i) applying and pressing the shoe upper (10) against the polyurethane (9);
j) curing the polyurethane (9), such that the mentioned shoe upper (10) is fixed to the outsole (4);
k) ending the process for curing the polyurethane (9) and extracting the outsole (4) and the shoe upper (10) from the injection mold (8) to obtain the work shoe (14).

2. Process for manufacturing a work shoe according to claim 1, **characterized in that** in phase a) the first mixture (5) of rubber is deposited on areas (11,11') defined in the mold (1) corresponding with the toe and the heel of the outsole (4) and **in that** said areas (11,11') have the desired drawing corresponding to the toe and heel.

3. Process for manufacturing a work shoe according to claim 2, **characterized in that** the mentioned areas (11,11') are defined by a delimiting peripheral rib (12).

4. Process for manufacturing a work shoe according to claim 1, **characterized in that** the first mixture (5) of rubber and the second mixture (6) of rubber have a different composition.

5. Process for manufacturing a work shoe according to claim 1, **characterized in that** the first mixture (5) of rubber and the second mixture (6) of rubber have the same composition.

## Patentansprüche

1. Verfahren zur Herstellung eines Arbeitsschuhs (14) mit einer Außensohle (4) und einem Schuhoberteil (10) wobei die folgenden Phasen vorgesehen sind:
a) Abscheiden einer ersten Menge einer ersten Mischung (5) aus vulkanisierbarem Gummi in einer Form (1) mit einer Badewannenform und einer Innenoberfläche entsprechend der endgültigen Außenform der zu erhaltenden Außensohle (4);
b) Pressen der erwähnten ersten Mischung (5) aus Gummi mittels mindestens einer Gegenform (2) und Starten des Verfahrens zur Vulkanisierung der erwähnten Mischung (5);
c) Entfernung der ersten Gegenform (2) und Abscheiden einer zweiten Menge einer zweiten Mischung (6) aus vulkanisierbarem Gummi innerhalb der erwähnten Form (1);
d) Pressen der zweiten Mischung (6) aus Gummi mittels einer zweiten Gegenform (3) mit einer Außenoberfläche entsprechend der endgültigen Innenform der Außensohle (2), wobei die Dimensionen der zweiten Gegenform (3) kleiner sind als die Dimensionen der Form (1) derart, dass ein Raum durch den die zweite Mischung (6) aus Gummi fließt definiert wird zwischen der erwähnten zweiten Gegenform (3) und der Form (1);
e) Beenden des Prozesses zur Vulkanisierung der ersten Mischung (5) des Gummis und der zweiten Mischung (6) des Gummis zum Erhalt einer Außensohle (4) mit einer Badewannenform und zwar einen Hohlraum (7) definierend;
f) Entnehmen der Außensohle (4) vulkanisiert in der Phase e);
g) Platzieren der Außensohle (4) erhalten in der Phase f) in einer Spritzform (8) und Gießen von Polyurethan (9) in den Hohlraum (7) der Außensohle 4;
h) Zusammenbau des Schuhoberteils (10) mit einem Metallleisten (13);
i) Aufbringen und Pressen des Schuhoberteils (10) gegen das Polyurethan (9);
j) Aushärten des Polyurethans (9) derart, dass der erwähnte Schuhoberteil (10) an der Außensohle (4) befestigt ist;
k) Beenden des Prozesses zur Aushärtung des Polyurethans (9) und Herausziehen der Außensohle (4) und des Schuhoberteils (5) aus der Einspritzform (8) zum Erhalt des Arbeitsschuhs (14).

2. Verfahren zur Herstellung eines Arbeitsschuhs gemäß Anspruch 1 **dadurch gekennzeichnet, dass** in der Phase a) die erste Mischung (5) aus Gummi auf Gebieten (11, 11') abgeschieden wird, die definiert sind in der Form (1) entsprechend den Zehen und der Ferse der Außensohle (4) und das die erwähnten Gebiete (11, 11') die gewünschte Zeichnung entsprechend von Zehen und Ferse haben.

3. Verfahren zur Herstellung eines Arbeitsschuhs gemäß Anspruch 2 **dadurch gekennzeichnet, dass** die erwähnten Gebiete (11, 11') durch eine begrenzende Umfangsrippe (12) definiert werden.

4. Verfahren zur Herstellung eines Arbeitsschuhs nach Anspruch 1 **dadurch gekennzeichnet, dass** die erste Mischung (5) aus Gummi und die zweite Mischung (6) aus Gummi unterschiedliche Zusammensetzung besitzen.

5. Verfahren zur Herstellung eines Arbeitsschuhs nach Anspruch 1 **dadurch gekennzeichnet, dass** die erste Mischung (5) aus Gummi und die zweite Mischung (6) aus Gummi die gleiche Zusammensetzung besitzen.

## Revendications

1. Procédé de fabrication d'une chaussure de travail (14) équipée d'une semelle d'usure (4) et d'une tige (10) comprenant les étapes consistant à :
a) déposer une première quantité d'un premier mélange de caoutchouc vulcanisable (5) dans un moule (1) ayant la forme d'une baignoire et une surface interne correspondant à la forme externe finale de la semelle d'usure (4) à obtenir,
b) comprimer ce premier mélange de caoutchouc (5) au moyen d'au moins un premier contre-moule (2) et démarrer le procédé de vulcanisation du mélange (5),
c) extraire le premier contre-moule (2) et déposer une seconde quantité d'un second mélange de caoutchouc vulcanisable (6) à la partie interne du moule (1),
d) comprimer le second mélange de caoutchouc (6) au moyen d'un second contre-moule (3) ayant une surface externe correspondant à la forme interne finale de la semelle d'usure (4), les dimensions du second contre-moule (3) étant inférieures aux dimensions du moule (1) de sorte qu'un espace au travers duquel le second mélange de caoutchouc (6) s'écoule soit défini entre le second contre-moule (3) et le moule (1),
e) achever le procédé de vulcanisation du premier mélange de caoutchouc (5) et du second mélange de caoutchouc (6) pour obtenir une semelle d'usure (4) ayant la forme d'une baignoire définissant une cavité (7),
f) extraire la semelle d'usure (4) vulcanisée dans l'étape e),
g) mettre en place la semelle d'usure (4) obtenue à l'issue de l'étape f) dans un moule d'injection (8) et couler du polyuréthane (9) dans la cavité (7) de la semelle d'usure (4),
h) assembler la tige (10) dans une forme métallique (13),
i) appliquer et comprimer la tige (10) contre le polyuréthane (9),
j) polymériser le polyuréthane (9) de sorte que la tige (10) soit fixée à la semelle d'usure (4),
k) achever le procédé de polymérisation du polyuréthane (9) et extraire la semelle d'usure (4) et la tige (10) du moule d'injection (8) pour obtenir la chaussure de travail (14).

2. Procédé de fabrication d'une chaussure de travail conforme à la revendication 1,
**caractérisé en ce que**
lors de l'étape a) le premier mélange de caoutchouc (5) est déposé dans un moule (1) sur des surfaces (11, 11') définies correspondant au bout de pied et au talon de la semelle d'usure (4) et ces surfaces (11, 11') ont le dessin souhaité correspondant au bout de pied et au talon.

3. Procédé de fabrication d'une chaussure de travail conforme à la revendication 2,
**caractérisé en ce que**
les surfaces (11, 11') sont définies par une nervure périphérique de délimitation (12).

4. Procédé de fabrication d'une chaussure de travail conforme à la revendication 1,
**caractérisé en ce que**
le premier mélange de caoutchouc (5) et le second mélange de caoutchouc (6) ont une composition différente.

5. Procédé de fabrication d'une chaussure de travail conforme à la revendication 1,
**caractérisé en ce que**
le premier mélange de caoutchouc (5) et le second mélange de caoutchouc (6) ont la même composition.
